(19) Europäisches Patentamt
European Patent Office
Office européen des brevets

(11) **EP 4 593 474 A1**

(12) **EUROPEAN PATENT APPLICATION**

(43) Date of publication:
**30.07.2025 Bulletin 2025/31**

(21) Application number: **24154390.9**

(22) Date of filing: **29.01.2024**

(51) International Patent Classification (IPC):
*H04W 52/32* $^{(2009.01)}$

(52) Cooperative Patent Classification (CPC):
**H04W 52/325**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nokia Technologies Oy
02610 Espoo (FI)**

(72) Inventors:
• **Takahashi, Hideaki
Yokohama, 223-0061 (JP)**
• **Mandelli, Silvio
71634 Ludwigsburg (DE)**
• **Ahmadzadeh, Arman
81541 Munich (DE)**
• **Henninger, Marcus Roland
71636 Ludwigsburg (DE)**

(74) Representative: **Nokia EPO representatives
Nokia Technologies Oy
Karakaari 7
02610 Espoo (FI)**

(54) **APPARATUS, METHOD, AND COMPUTER PROGRAM**

(57) The disclosure relates to an apparatus comprising: means for receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; means for configuring the at least one sounding reference signal resource set based on the first configuration information; and means for transmitting the at least one sounding reference signal towards the at least one sensing area on the at least one sounding reference signal resource set

**1500** Apparatus may receive first configuration information for configuring at least one SRS resource set for transmitting at least one SRS towards at least one sensing area, wherein the first configuration information indicates at least one TPC parameter set for determining at least one transmission power for transmitting the at least one SRS towards the at least one sensing area on the at least one SRS resource

**1502** Apparatus may configure the at least one SRS resource set based on the first configuration information

**1504** Apparatus may transmit the at least one SRS towards the at least one sensing area on the at least one SRS resource set

Fig. 15

**Description**

Field of the disclosure

The present disclosure relates to an apparatus, a method, and a computer program for transmitting at least one sounding reference signal towards at least one sensing area in a communication system.

Background

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices typically operate in accordance with a given standard or specification which sets out what the various entities associated with the system are permitted to do and how that should be achieved. Communication protocols and/or parameters which shall be used for the connection are also typically defined. Examples of standards are the so-called 5G standards.

Summary

According to an aspect there is provided an apparatus comprising: means for receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; means for configuring the at least one sounding reference signal resource set based on the first configuration information; and means for transmitting the at least one sounding reference signal towards the at least one sensing area on the at least one sounding reference signal resource set.

The means for receiving first configuration information for configuring at least one sounding reference signal resource set for transmitting at least one sounding reference signal towards at least one sensing area may comprise: means for receiving first configuration information for configuring multiple subgroups of sounding reference signal resources of a single sounding reference signal resource set for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple subgroups of sounding reference signal resources; The means for configuring the at least one sounding reference signal resource set based on the first configuration information may comprise: means for configuring the single sounding reference signal resource set based on the first configuration information; and the means for transmitting the at least one sounding reference signal towards the at least one sensing area on the at least one sounding reference signal resource set may comprise: means for transmitting multiple sounding reference signals towards the multiple sensing areas on the multiple subgroups of sounding reference signal resources .

The single sounding reference signal resource set may include multiple sounding reference signal resource subgroups associated with multiple transmission power control parameter sets. Each sounding reference signal resource subgroup may comprise one or more sounding reference signal resources. Each sounding reference signal resource subgroup of the single sounding reference signal resource set may be configured for transmitting a different sounding reference signal towards a different sensing area

The means for receiving first configuration information for configuring at least one sounding reference signal resource set for transmitting at least one sounding reference signal towards at least one sensing area may comprise: means for receiving first configuration information for configuring multiple sounding reference signal resource sets for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple sounding reference signal resource sets; the means for configuring the at least one sounding reference signal resource set based on the first configuration information may comprise: means for configuring the multiple sounding reference signal resource sets based on the first configuration information; and the means for transmitting the at least one sounding reference signal towards the at least one sensing area on the at least one sounding reference signal resource set may comprise: means for transmitting the multiple sounding reference signals towards the multiple sensing areas on the multiple sounding reference signal resource sets.

Each sounding reference signal resource of a same sounding reference signal resource set may be configured for transmitting a same sounding reference signal towards a same sensing area.

Each sounding reference signal resource of a different sounding reference signal resource set may be configured for transmitting a different sounding reference signal towards a different sensing area.

The at least one transmission power control parameter set may comprise at least one of the following: a target signal to interference plus noise ratio P0; a pathloss compensation coefficient $\alpha$; at least one pathloss reference signal associated with the at least one sounding reference signal resource set; or an association between a transmission power control command and a sounding reference signal resource set or a subgroup of sounding reference signal resources included in a sounding reference signal resource set.

The apparatus may use the at least one pathloss reference signal to estimate a pathloss between the apparatus and a base station and may determine at least one transmission control power for transmitting the at least one sounding reference signal based on the pathloss.

The at least one transmission power control parameter set may be received from a sensing management function.

The first configuration information comprising the at least one transmission power control parameter set may be received directly from a sensing management function; or the first configuration information comprising the at least one transmission power control parameter set may be received indirectly from a sensing management function via a base station.

The apparatus may comprise: means for receiving updated first configuration information indicating at least one updated transmission power control parameter set for determining at least one updated transmission power for transmitting the at least one sounding reference signal towards the at least one sensing area on the at least one sounding reference signal resource set.

The updated transmission power control parameter set may be determined by the sensing management function based on results of sensing measurements based on the at least one sensing reference signal transmitted on the at least one sensing reference signal resource set.

The at least one transmission power control parameter set may be based on at least one of: characteristics of the at least one sensing area; characteristics of at least one target object; or interference caused by the apparatus to a neighbour base station.

The characteristics of at least one target object may comprise at least one of: a radar cross section of the at least one target object; or a type of the at least one target object.

A type of the at least one target object may comprise an unmanned aerial vehicle, an unmanned terrestrial vehicle or a human.

The first configuration information may indicate at least one of: at least one sounding reference signal resource set; at least one sounding reference signal resource included in the at least one sounding reference signal resource set; or a type of the at least one sounding reference signal resource included in the at least one sounding reference signal resource set.

A type of the at least one sounding reference signal resource included in the at least one sounding reference signal resource set may comprise periodic, aperiodic, persistent or semi-persistent.

Configuring the least one sounding reference signal resource set for transmitting the at least one sounding reference signal based on the first configuration information may comprise determining at least one transmission power for transmitting the at least one sounding reference signal based on the at least one transmission power control parameter set.

The apparatus may comprise: means for receiving second configuration information for configuring at least one sounding reference signal resource set for transmitting at least one sounding reference signal towards a base station, wherein the second configuration information comprises at least one transmission power control parameter set for determining at least one transmission power for transmitting the at least one sounding reference signal towards the base station on the at least one sounding reference signal resource set; means for configuring the at least one sounding reference signal resource set based on the second configuration information; and means for transmitting the at least one sounding reference signal toward the base station on the at least one sounding reference signal resource set.

The apparatus may comprise: means for receiving third configuration information for configuring at least one sounding reference signal resource set for transmitting at least one sounding reference signal towards a base station for communicating with the base station, wherein the third configuration information comprises at least one transmission power control parameter set for determining at least one transmission power for transmitting the at least one sounding reference signal towards the base station on the at least one sounding reference signal resource set; means for configuring the at least one sounding reference signal resource set based on the third configuration information; and means for transmitting the at least one sounding reference signal toward the base station on the at least one sounding reference signal resource set.

The second configuration information and the third configuration information may comprise same configuration information.

The apparatus may comprise: means for receiving at least one transmission power control command indicating at least one transmission power offset associated with at least one sounding reference signal resource set; and means for adjusting at least one transmission power of at least one sounding reference signal transmitted on the at least one sounding reference signal resource set based on the at least one transmission power offset.

The association between at least one transmission power offset and the at least one sounding reference signal resource set may be defined in padding bits at the end of downlink control information.

The apparatus may comprise: means for receiving at least one transmission power control command indicating at least one sounding reference signal resource set and at least one transmission power offset associated with at least one sounding reference signal resource set; and means for adjusting at least one transmission power of at least one sounding reference signal transmitted on the at least one sounding reference signal resource set based on the at least one transmission power offset.

The at least one transmission power control command may indicate whether another transmission power control command is present.

The apparatus may comprise: means for receiving at least one transmission power control command indicating at least one transmission power offset associated with at least one sounding reference signal resource included in at least one sounding reference signal resource set; and means for adjusting at least one transmission power of at least one sounding reference signal transmitted on the at least one sounding reference signal resource included in the at least one sounding reference signal resource set based on the at least one transmission power offset.

The association between at least one transmission power offset associated with at least one sounding reference signal resource at least one sounding reference signal resource set may be defined in padding bits at the end of downlink control information.

The apparatus may comprise means for receiving at least one transmission power control command indicating at least one sounding reference signal resource included in at least one sounding reference signal resource set and at least one transmission power offset associated with the at least one sounding reference signal resource included in at least one sounding reference signal resource set; and means for adjusting at least one transmission power of at least one sounding reference signal transmitted on the at least one sounding reference signal resource included in the at least one sounding reference signal resource set based on the at least one transmission power offset.

The at least one transmission power control command may indicate whether a subsequent transmission power control command is present.

The apparatus may comprise: means for receiving a medium access control control element indicating an updated pathloss reference signal associated with at least one sounding reference signal resource set; and means for reconfiguring the at least one sounding reference signal resource set based on the updated pathloss reference signal.

Reconfiguring the at least one sounding reference signal resource set based on the updated pathloss reference signal may comprise: determining an updated pathloss between the apparatus and the base station based on the updated pathloss reference signal; and adjusting a transmission power of a sounding reference signal transmitted on the at least one sounding reference signal resource set based on the updated pathloss.

The apparatus may comprise: means for receiving a medium access control control element indicating an updated pathloss reference signal associated with at least one sounding reference signal resource included in at least one sounding reference signal resource set; and means for reconfiguring the at least one sounding reference signal resource set based on the updated pathloss reference signal.

Reconfiguring the at least one sounding reference signal resource included in at least one sounding reference signal resource set based on the updated pathloss reference signal may comprise: determining an updated pathloss between the apparatus and the base station based on the updated pathloss reference signal; and adjusting a transmission power of a sounding reference signal transmitted on the at least one sounding reference signal resource included in the at least one sounding reference signal resource set based on the updated pathloss.

The apparatus may be a user equipment.

According to an aspect there is provided a method comprising: receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; configuring the at least one sounding reference signal resource set based on the first configuration information; and transmitting the at least one sounding reference signal towards the at least one sensing area on the at least one sounding reference signal resource set.

The method may be performed by an apparatus. The apparatus may be a user equipment.

Receiving first configuration information for configuring at least one sounding reference signal resource set for transmitting at least one sounding reference signal towards at least one sensing area may comprise: receiving first configuration information for configuring multiple subgroups of sounding reference signal resources of a single sounding reference signal resource set for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple subgroups of sounding reference signal resources; configuring the at least one sounding reference signal resource set based on the first configuration information may comprise: configuring the single sounding reference signal resource set based on the first configuration information; and transmitting the at least one sounding reference signal towards the at least one sensing area on the at least one sounding reference signal resource set may comprise: transmitting multiple sounding reference signals towards the multiple sensing areas on the multiple subgroups of sounding reference signal resources .

The single sounding reference signal resource set may include multiple sounding reference signal resource subgroups associated with multiple transmission power control parameter sets. Each sounding reference signal resource subgroup may comprise one or more sounding reference signal resources. Each sounding reference signal resource subgroup of the single sounding reference signal resource set may be configured for transmitting a different sounding reference signal towards a different sensing area.

Receiving first configuration information for configuring at least one sounding reference signal resource set for transmitting at least one sounding reference signal towards at least one sensing area may comprise: receiving first configuration information for configuring multiple sounding reference signal resource sets for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple sounding reference signal resource sets; configuring the at least one sounding reference signal resource set based on the first configuration information may comprise: configuring the multiple sounding reference signal resource sets based on the first configuration information; and transmitting the at least one sounding reference signal towards the at least one sensing area on the at least one sounding reference signal resource set may comprise: transmitting the multiple sounding reference signals towards the multiple sensing areas on the multiple sounding reference signal resource sets.

Each sounding reference signal resource of a same sounding reference signal resource set may be configured for transmitting a same sounding reference signal towards a same sensing area.

Each sounding reference signal resource of a different sounding reference signal resource set may be configured for transmitting a different sounding reference signal towards a different sensing area.

The at least one transmission power control parameter set may comprise at least one of the following: a target signal to interference plus noise ratio P0; a pathloss compensation coefficient $\alpha$; at least one pathloss reference signal associated with the at least one sounding reference signal resource set; or an association between a transmission power control command and a sounding reference signal resource set or a subgroup of sounding reference signal resources included in a sounding reference signal resource set.

The at least one pathloss reference signal may be used to estimate a pathloss between the apparatus and a base station and may determine at least one transmission control power for transmitting the at least one sounding reference signal based on the pathloss.

The at least one transmission power control parameter set may be received from a sensing management function.

The first configuration information comprising the at least one transmission power control parameter set may be received directly from a sensing management function; or the first configuration information comprising the at least one transmission power control parameter set may be received indirectly from a sensing management function via a base station.

The method may comprise: receiving updated first configuration information indicating at least one updated transmission power control parameter set for determining at least one updated transmission power for transmitting the at least one sounding reference signal towards the at least one sensing area on the at least one sounding reference signal resource set.

The updated transmission power control parameter set may be determined by the sensing management function based on results of sensing measurements based on the at least one sensing reference signal transmitted on the at least one sensing reference signal resource set.

The at least one transmission power control parameter set may be based on at least one of: characteristics of the at least one sensing area; characteristics of at least one target object; or interference caused by the apparatus to a neighbour base station.

The characteristics of at least one target object may comprise at least one of: a radar cross section of the at least one target object; or a type of the at least one target object.

A type of the at least one target object may comprise an unmanned aerial vehicle, an unmanned terrestrial vehicle or a human.

The first configuration information may indicate at least one of: at least one sounding reference signal resource set; at least one sounding reference signal resource included in the at least one sounding reference signal resource set; or a type of the at least one sounding reference signal resource included in the at least one sounding reference signal resource set.

A type of the at least one sounding reference signal resource included in the at least one sounding reference signal resource set may comprise periodic, aperiodic, persistent or semi-persistent.

Configuring the least one sounding reference signal resource set for transmitting the at least one sounding reference signal based on the first configuration information may comprise determining at least one transmission power for transmitting the at least one sounding reference signal based on the at least one transmission power control parameter set.

The method may comprise: receiving second configuration information for configuring at least one sounding reference signal resource set for transmitting at least one sounding reference signal towards a base station, wherein the second configuration information comprises at least one transmission power control parameter set for determining at least one transmission power for transmitting the at least one sounding reference signal towards the base station on the at least one sounding reference signal resource set; configuring the at least one sounding reference signal resource set based on the second configuration information; and transmitting the at least one sounding reference signal toward the base station on the at least one sounding reference signal resource set.

The method may comprise: receiving third configuration information for configuring at least one sounding reference signal resource set for transmitting at least one sounding reference signal towards a base station for communicating with the base station, wherein the third configuration information comprises at least one transmission power control parameter set for determining at least one transmission power for transmitting the at least one sounding reference signal towards the base station on the at least one sounding reference signal resource set; configuring the at least one sounding reference signal resource set based on the third configuration information; and transmitting the at least one sounding reference signal toward the base station on the at least one sounding reference signal resource set.

The second configuration information and the third configuration information may comprise same configuration information.

The method may comprise: receiving at least one transmission power control command indicating at least one transmission power offset associated with at least one sounding reference signal resource set; and adjusting at least one transmission power of at least one sounding reference signal transmitted on the at least one sounding reference signal resource set based on the at least one transmission power offset.

The association between at least one transmission power offset and the at least one sounding reference signal resource set may be defined in padding bits at the end of downlink control information.

The method may comprise: receiving at least one transmission power control command indicating at least one sounding reference signal resource set and at least one transmission power offset associated with at least one sounding reference signal resource set; and adjusting at least one transmission power of at least one sounding reference signal transmitted on the at least one sounding reference signal resource set based on the at least one transmission power offset.

The at least one transmission power control command may indicate whether another transmission power control command is present.

The method may comprise: receiving at least one transmission power control command indicating at least one transmission power offset associated with at least one sounding reference signal resource included in at least one sounding reference signal resource set; and adjusting at least one transmission power of at least one sounding reference signal transmitted on the at least one sounding reference signal resource included in the at least one sounding reference signal resource set based on the at least one transmission power offset.

The association between at least one transmission power offset associated with at least one sounding reference signal resource at least one sounding reference signal resource set may be defined in padding bits at the end of downlink control information.

The method may comprise: receiving at least one transmission power control command indicating at least one sounding reference signal resource included in at least one sounding reference signal resource set and at least one transmission power offset associated with the at least one sounding reference signal resource included in at least one sounding reference signal resource set; and adjusting at least one transmission power of at least one sounding reference signal transmitted on the at least one sounding reference signal resource included in the at least one sounding reference signal resource set based on the at least one transmission power offset.

The at least one transmission power control command may indicate whether a subsequent transmission power control command is present.

The method may comprise: receiving a medium access control control element indicating an updated pathloss reference signal associated with at least one sounding reference signal resource set; and reconfiguring the at least one sounding reference signal resource set based on the updated pathloss reference signal.

Reconfiguring the at least one sounding reference signal resource set based on the updated pathloss reference signal may comprise: determining an updated pathloss between the apparatus and the base station based on the updated pathloss reference signal; and adjusting a transmission power of a sounding reference signal transmitted on the at least one sounding reference signal resource set based on the updated path loss.

The method may comprise: receiving a medium access control control element indicating an updated pathloss reference signal associated with at least one sounding reference signal resource included in at least one sounding reference signal resource set; and reconfiguring the at least one sounding reference signal resource set based on the updated pathloss reference signal.

Reconfiguring the at least one sounding reference signal resource included in at least one sounding reference signal resource set based on the updated pathloss reference signal may comprise: determining an updated pathloss between the apparatus and the base station based on the updated pathloss reference signal; and adjusting a transmission power of a sounding reference signal transmitted on the at least one sounding reference signal resource included in the at least one sounding reference signal resource set based on the updated pathloss.

According to an aspect there is provided an apparatus comprising at least one processor and at least one memory storing instructions that, when executed by the at least one processor, cause the apparatus at least to perform: receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; configuring the at least one sounding reference signal resource set based on the first configuration information; and transmitting the at least one sounding reference signal towards the at least one sensing area on the at least one sounding reference signal resource set.

According to an aspect there is provided an apparatus comprising circuitry configured to perform: receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; configuring the at least one sounding reference signal resource set based on the first configuration information; and transmitting the at least one sounding reference signal towards the at least one sensing area on the at least one sounding reference signal resource set.

According to an aspect there is provided a computer program comprising computer executable code which when run on at least one processor is configured to perform: receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set; configuring the at least one sounding reference signal resource set based on the first configuration information; and transmitting the at least one sounding reference signal towards the at least one sensing area on the at least one sounding reference signal resource set.

According to an aspect, there is provided a computer readable medium comprising program instructions stored thereon for performing at least one of the above methods.

According to an aspect, there is provided a non-transitory computer readable medium comprising program instructions stored thereon for performing at least one of the above methods.

According to an aspect, there is provided a non-volatile tangible memory medium comprising program instructions stored thereon for performing at least one of the above methods.

In the above, many different aspects have been described. It should be appreciated that further aspects may be provided by the combination of any two or more of the aspects described above.

Various other aspects are also described in the following detailed description and in the attached claims.

List of abbreviations

AF:         Application Function
AI:         Artificial Intelligence
AMF:        Access and Mobility Management Function
API:        Application Programming Interface
BS:         Base Station
BWP:        Bandwidth Part
CE:         Control Element

CU:        Centralized Unit
DL:        Downlink
DU:        Distributed Unit
gNB:       gNodeB
GSM:      Global System for Mobile Communication
HSS:       Home Subscriber Server
IE:         Information Element
IoT:        Internet of Things
LMF:       Location Management Function
LPP:       LTE Positioning Protocol
LTE:       Long Term Evolution
MAC:      Medium Access Control
ML:        Machine Learning
MS:        Mobile Station
MTC:      Machine Type Communication
NEF:       Network Exposure Function
NF:        Network Function
NR:        New Radio
NRF:       Network Repository Function
RAM:      Random Access Memory
(R)AN:    (Radio) Access Network
ROM:     Read Only Memory
SINR:     Signal to Interference plus Noise Ratio
SeMF:    Sensing Management Function
SMF:     Session Management Function
SRS:      Sounding Reference Signal
TR:        Technical Report
TS:        Technical Specification
UE:        User Equipment
UMTS:    Universal Mobile Telecommunication System
3GPP:    3rd Generation Partnership Project
5G:        5th Generation
5GC:      5G Core network
5GS:      5G System

Brief Description of the Figures

Embodiments will now be described, by way of example only, with reference to the accompanying Figures in which:

Fig. 1 shows a schematic representation of a 5G system;

Fig. 2 shows a schematic representation of a control apparatus;

Fig. 3 shows a schematic representation of a user equipment;

Fig. 4 shows a schematic representation of a scenario where a user equipment configures a sounding reference signal resource set for transmitting a sounding reference signal towards a sensing area for sensing an unmanned aerial vehicle and another sounding reference signal resource set for transmitting another sounding reference signal towards another sensing area for sensing a human;

Fig. 5 shows a signaling diagram of a method for transmitting multiple sounding reference signals towards multiple sensing areas for sensing multiple target objects in a 5GS;

Fig. 6 shows a schematic representation of a scenario where a user equipment configures at least one sounding reference signal resource set for transmitting a sounding reference signal towards a sensing area for sensing an unmanned aerial vehicle and another sounding reference signal towards a gNodeB for sensing the unmanned aerial vehicle;

Fig. 7 shows a schematic representation of a scenario where a user equipment configures a sounding reference signal resource set for transmitting a sounding reference signal towards a sensing area for sensing a target object, for transmitting another sounding reference signal towards another sensing area for sensing another target object and for transmitting another sounding reference signal towards a gNodeB for sensing the target object and the other target object;

Fig. 8 shows a schematic representation of a scenario where a user equipment configures a sounding reference signal resource set for transmitting a sounding reference signal towards a sensing area for sensing a target object, another sounding reference signal resource set for transmitting another sounding reference signal towards area gNodeB for sensing the target object and another sounding reference signal resource set for transmitting another sounding reference signal towards the gNodeB for communicating with the gNodeB;

Fig. 9 shows a schematic representation of a scenario where a user equipment receives a transmission power control command comprising a transmission power offset, adjust the transmission power of a sounding reference signal transmitted towards a sensing area for sensing the target based on the transmission power offset and where the user equipment does not adjust the transmission power of another sounding reference signal transmitted towards a gNodeB for sensing the target object or for communication with the gNB based on the transmission power offset;

Fig. 10 shows a schematic representation of a downlink control information format comprising transmission power control commands;

Fig. 11 shows a schematic representation of another downlink control information format comprising transmission power control commands;

Fig. 12 shows a schematic representation of another downlink control information format comprising transmission power control commands;

Fig. 13 shows a schematic representation of a medium access control control element indicating an updated pathloss reference signal associated with a subgroup of sounding reference signal reference resources of a sounding reference signal reference resource set;

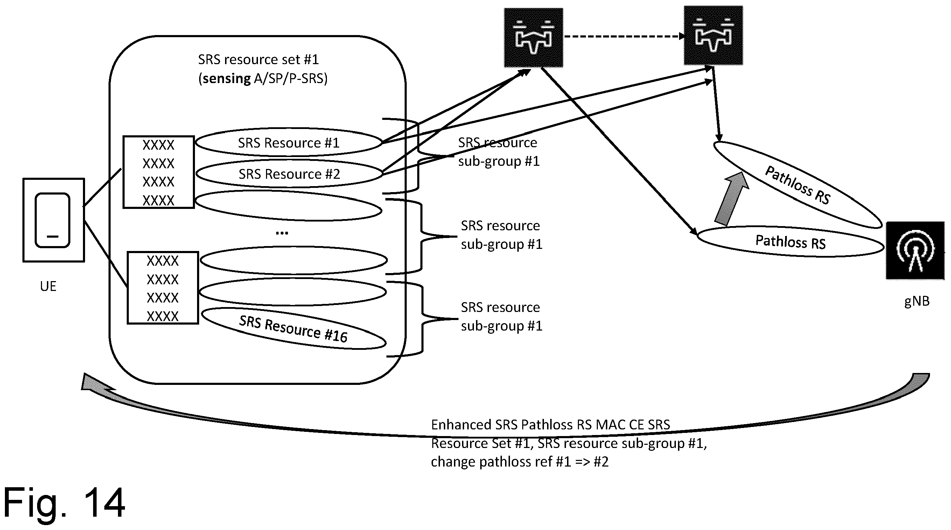

Fig. 14 shows a schematic representation of a scenario where a user equipment configures a sounding reference signal resource set for transmitting a sounding reference signal towards a sensing area for sensing a target object on a sub-group of sounding reference signal resources based on a pathloss reference signal, receives medium access control control element indicating an updated pathloss reference signal for the sub-group of sounding reference signal resources and reconfigures the sounding reference signal resource set for transmitting the sounding reference signal towards the sensing area for sensing the target object on the sub-group of sounding reference signal resources based on the updated pathloss reference signal.

Fig. 15 shows a block diagram of a method for transmitting at least one sounding reference signal towards at least one sensing area for sensing at least one target object in a communication system; and

Fig. 16 shows a schematic representation of a non-volatile memory medium storing instructions which when executed by a processor allow a processor to perform one or more of the steps of the methods of Fig. 15.

Detailed Description of the Figures

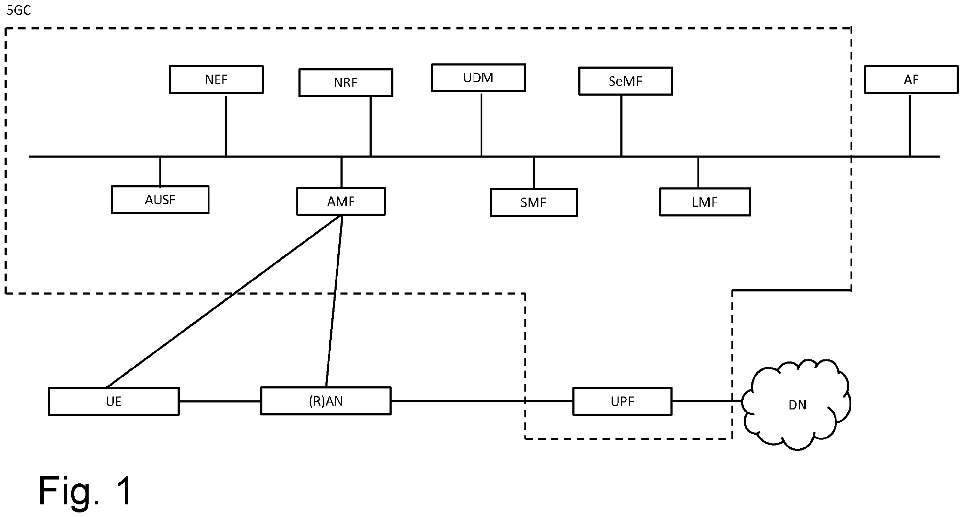

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Fig. 1, Fig. 2 and Fig. 3 to assist in understanding the technology underlying the described examples.

FIG. 1 shows a schematic representation of a 5G system (5GS). The 5GS may comprises a user equipment (UE), a (radio) access network ((R)AN), a 5G core network (5GC), one or more application functions (AF) and one or more data networks (DN).

The 5G (R)AN may comprise one or more gNodeB (gNB) distributed unit functions connected to one or more gNodeB (gNB) centralized unit functions.

The 5GC may comprise an authentication server function (AUSF), an access and mobility management function (AMF), a session management function (SMF), a location management function (LMF), a network exposure function (NEF), a network repository function (NRF), a user data management (UDM), a sensing management function (SeMF) and/or other network functions (NFs).

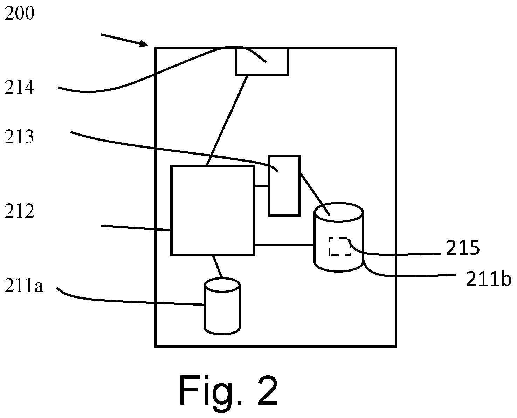

Fig. 2 illustrates an example of a control apparatus 200 for controlling a function of the (R)AN or the 5GC as illustrated on Fig. 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5G (R)AN or the 5GC. In some embodiments, each function of the (R)AN or the 5GC comprises a control apparatus 200. In alternative embodiments, two or more functions of the (R)AN or the 5GC may share a control apparatus.

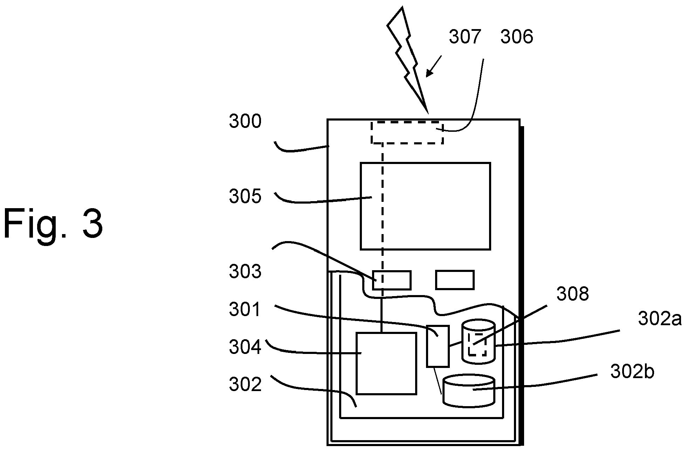

Fig. 3 illustrates an example of a UE 300, such as the UE illustrated on Fig. 1. The UE 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, a Cellular Internet of things (CIoT) device or any combinations of these or the like. The UE 300 may provide, for example, communication of data for carrying communications. The communications may be one or more of voice, electronic mail (email), text message, multimedia, data, machine data and so on.

The UE 300 may receive signals over an air or radio interface 307 via appropriate apparatus for receiving and may transmit signals via appropriate apparatus for transmitting radio signals. In Fig. 3 transceiver apparatus is designated schematically by block 306. The transceiver apparatus 306 may be provided for example by means of a radio part and associated antenna arrangement. The antenna arrangement may be arranged internally or externally to the mobile device.

The UE 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as keypad 305, touch sensitive screen or pad, combinations thereof or the like. Optionally one or more of a display, a speaker and a microphone may be provided depending on the type of the device.

One or more aspect of this disclosure relates to providing an open and/or closed loop transmission power control (TPC) framework for transmitting at least one SRS towards at least one sensing area for sensing at least one target object.

The open and/or closed loop TPC framework for transmitting at least one SRS towards at least one sensing area for sensing at least one target object may coexist and may be independent from an open and/or closed loop TPC framework for allowing a UE to transmit at least one SRS towards a BS for communicating with the BS.

Transmitting at least one SRS towards at least one sensing area for sensing at least one target object may be used to obtain information about the at least one target object (e.g. shape, size, orientation, speed, location, distance or relative motion with at least one other target object). For example, the at least one object may be an unmanned aerial vehicle or a human. The information about the at least one target object may be used to perform trajectory flight tracing, intruder detection at home or gesture recognition for application navigation and immersive interaction.

Transmitting at least one SRS towards the BS for communicating with the BS may be used to perform codebook or non-codebook based UL multiple input multiple output transmission, to perform beam management, to perform antenna switching, to perform UL positioning or to perform propagation delay compensation.

First implementation

The UE may receive first configuration information for configuring a single SRS resource set for transmitting multiple SRSs towards multiple sensing areas for sensing multiple target objects. The multiple SRSs may be scattered by the multiple target objects towards a BS (i.e. scattered beams). The single SRS resource set may be dedicated for transmitting multiple SRSs towards multiple sensing areas for sensing multiple target objects.

The single SRS resource set may include multiple subgroups of SRS resources. Each subgroup of SRS resources may comprise one or more SRS resources. Each subgroup of SRS resources may be configured for transmitting an SRS towards a different sensing area for sensing a different target object.

The first configuration information may be received from a sensing management function (SeMF) or any other function configured to manage sensing operations. The first configuration information may be received directly from the SeMF. The configuration information may be received directly from the SeMF using a peer-to-peer protocol. The peer-to-peer protocol may be the LTE positioning protocol or an extension of the LTE positioning protocol. The first configuration information may be received indirectly from the SeMF via a BS. The first configuration information may be received indirectly from the SeMF via a BS using a hop-by-hop protocol. The hop-by-hop protocol may use radio resource control signalling.

The first configuration information may indicate the single sounding reference signal resource set.

The first configuration information may indicate subgroup of SRS resources included in the SRS resource set.

The first configuration information may indicate SRS resources included in the subgroup of SRS resources.

The first configuration information may indicate multiple TPC parameter sets. Each TPC parameter set may be associated with a subgroup of SRS resources, with a sensing area and with a target object. Each TPC parameter set may be used to determine a transmission power for transmitting an SRS toward a sensing area to sense a target object on a subgroup of SRS resources. Each TPC parameter set may comprise a target signal to interference plus noise ratio P0. Each TPC parameter set may comprise a pathloss compensation coefficient $\alpha$. Each TPC parameter set may comprise a pathloss reference signal associated with a subgroup of SRS resources.

Each TPC parameter set may comprise an association between a TPC command and a subgroup of SRS resources.

Each TPC parameter set may be based on at least one of characteristics of the sensing area, characteristics of the target object or interference caused by the UE to a neighbour BS. The characteristics of the target object may comprise at least one of a radar cross section of the target object or a type of the at least one target object. The type of the target object may comprise an unmanned aerial vehicle, an unmanned terrestrial vehicle or a human. The characteristics of a sensing area may comprise an urban sensing area or a rural sensing area.

The first configuration information may indicate a type of the SRS resources included in the subgroup of SRS resources. The type of the SRS resources may comprise periodic, aperiodic, persistent or semi-persistent.

The UE may configure the subgroup of SRS resources set based on the first configuration information. The UE may determine multiple transmission powers based on the multiple TPC parameter sets. Each transmission power may be associated with a subgroup of SRS resources, with a sensing area, with a target object and with a TPC parameter set. Each transmission power may be determined as follows:

$$Transmission\ power = P0 + \alpha \cdot pathloss + 10 \cdot log10(Transmission\ bandwidth) +$$
$$modulation\ and\ channel\ coding\ or\ format\ specific\ offset\ (if\ applicable) + transmission$$
$$power\ offset\ (if\ applicable).$$

The pathloss between the UE and the BS may be estimated by the UE based on the pathloss reference signal.

The transmission power offset may be received by the UE from the BS in a TPC command. Without the transmission power offset, the transmission power is an open loop transmission power. With the transmission power offset, the transmission power is a closed loop transmission power.

The UE may transmit, to the multiple target objects, multiple SRSs on the multiple subgroups of SRS resources based the multiple transmission powers.

Additionally, the UE may receive second configuration information for configuring the single SRS set for transmitting SRS signal towards the BS for sensing the multiple target objects (i.e. direct beam).

The second configuration information may be received from the SeMF. The configuration information may be received directly from the SeMF. The second configuration information may be received indirectly from the SeMF via a BS.

The second configuration information may indicate the single SRS set.

The second configuration information may indicate a subgroup of SRS resources included in the single SRS resource set.

The second configuration information may indicate a TPC parameter set. The TPC parameter set may be associated with the BS and the subgroup of SRS resources.

The second configuration information may indicate a type of the SRS resources included in the subgroup of SRS resources. The type of the SRS resources may comprise periodic, aperiodic, persistent or semi-persistent.

The UE may configure the subgroup of SRS resources based on the second configuration information. The UE may determine a transmission power based on the TPC parameter set (as explained above)

The UE may transmit, to the BS, the SRS on the subgroup SRS resource set based on the transmission power.

The BS may receive and measure the multiple SRSs transmitted by the UE towards the multiple sensing areas and scattered by the multiple target objects towards the BS.

The BS may receive and measure the SRS transmitted by the UE towards the BS.

The BS may transmit the measurements to the SeMF and the SeMF may process the measurements to obtain information about the multiple target objects. The BS may periodically transmit the measurements to the SeMF and the SeMF may periodically process the measurements to obtain information about the multiple target objects. The information about the multiple target objects may comprise a shape, size, orientation, speed, location, distance or relative motion. The SeMF may maintain or update the multiple TPC parameter sets based on the information about the multiple target objects.

Additionally, the UE may receive third configuration information for configuring an SRS set for transmitting SRS signal towards the BS for communicating with the BS (i.e. direct beam).

The third configuration information may be received from the BS.

The third configuration information may indicate the SRS resource set.

The third configuration information may indicate SRS resources included in the SRS resource set.

The third configuration information may indicate a TPC parameter set.

The third configuration information may indicate a type of the SRS resources included in the SRS resource set. The type of the SRS resources may comprise periodic, aperiodic, persistent or semi-persistent.

The UE may configure the SRS resource set based on the third configuration information. The UE may determine a transmission power based on the TPC parameter set and the pathloss reference signal.

The UE may transmit, to the BS, the SRS on the SRS resource set based on the transmission power.

The pathloss reference signal of the second configuration and the pathloss reference signal of the third configuration may be identical.

It will be understood, the UE may not necessarily receive separate second configuration information and/or third configuration information. To save SRS resources, the UE may receive one configuration information for configuring an SRS set for transmitting SRS signal towards the BS both for communicating with the BS and for sensing the multiple target objects.

Second implementation

The UE may receive first configuration information for configuring multiple SRS resource sets for transmitting multiple SRSs towards multiple sensing areas for sensing multiple target objects. The multiple SRSs may be scattered by the multiple target objects towards a BS (i.e. scattered beams). The multiple SRS resource sets may be dedicated for transmitting multiple SRSs towards multiple sensing areas for sensing multiple target objects.

Each SRS resource set may include multiple SRS resources. Each SRS resource of a same SRS resource set may be configured for transmitting an SRS towards a same sensing area for sensing a same target object. Each SRS resource of a different SRS resource set may be configured for transmitting an SRS towards a different sensing area for sensing a different target object.

The first configuration information may be received from a SeMF or any other function configured to manage sensing operations. The first configuration information may be received directly from the SeMF. The first configuration information may be received directly from the SeMF using a peer-to-peer protocol. The peer-to-peer protocol may be the LTE positioning protocol or an extension of the LTE positioning protocol. The first configuration information may be received indirectly from the SeMF via a BS using a hop-by-hop protocol. The hop-by-hop protocol may be use radio resource control signalling.

The first configuration information may indicate the multiple SRS sets.

The first configuration information may indicate SRS resources included in the multiple SRS sets.

The first configuration information may indicate multiple TPC parameter sets. Each TPC parameter set may be associated with an SRS resource set, with a sensing area and with a target object. Each TPC parameter set may be used to determine a transmission power to transmit an SRS toward a sensing area to sense a target object on an SRS resource set. Each TPC parameter set may comprise a target signal to interference plus noise ratio P0. Each TPC parameter set may comprise a pathloss compensation coefficient $\alpha$. Each TPC parameter set may comprise a pathloss reference signal associated with an SRS resource set. Each TPC parameter set may comprise an association between a TPC command and an SRS resource set. Each TPC parameter set may be based on at least one of characteristics of the sensing area, characteristics of the target object or interference caused by the UE to a neighbour BS. The characteristics of the target object may comprise at least one of a radar cross section of the target object or a type of the at least one target object. The type of the target object may comprise an unmanned aerial vehicle, an unmanned terrestrial vehicle or a human. The characteristics of a sensing area may comprise an urban sensing area or a rural sensing area.

The first configuration information may indicate a type of the SRS resources included in the multiple SRS resource sets. The type of the SRS resources may comprise periodic, aperiodic, persistent or semi-persistent.

The UE may configure the multiple SRS resource sets based on the first configuration information. The UE may determine multiple transmission powers based on the multiple TPC parameter sets. Each transmission power may be associated with an SRS resource set, with a sensing area, with a target object, with a TPC parameter set. Each transmission power may be determined as follows:

Transmission power = P0 + α · pathloss + 10 · log10(Transmission bandwidth) + modulation and channel coding or format specific offset (if applicable) + transmission power offset (if applicable).

The pathloss between the UE and the BS may be estimated by the UE based on the pathloss reference signal.

The transmission power offset may be received by the UE from the BS in a TPC command. Without the transmission power offset, the transmission power is an open loop transmission power. With the transmission power offset, the transmission power is a closed loop transmission power.

The UE may transmit, to the multiple target objects, multiple SRSs on the multiple SRS resource sets based the multiple transmission powers.

Additionally, the UE may receive second configuration information for configuring an SRS set for transmitting SRS signal towards the BS for sensing the multiple target objects (i.e. direct beam).

The second configuration information may be received from the SeMF. The configuration information may be received directly from the SeMF. The configuration information may be received directly from the SeMF via a BS (as explained above).

The second configuration information may indicate the SRS resource set.

The second configuration information may indicate SRS resources included in the SRS resource set.

The second configuration information may indicate a TPC parameter set.

The second configuration information may indicate a type of the SRS resources included in the SRS resource set. The type of the SRS resources may comprise periodic, aperiodic, persistent or semi-persistent.

The UE may configure the SRS resource set based on the second configuration information. The UE may determine a transmission power based on the TPC parameter set (as explained above).

The UE may transmit, to the BS, the SRS on the SRS resource set based on the transmission power.

The BS may receive and measure the multiple SRSs transmitted by the UE towards the multiple sensing area and scattered by the multiple target objects towards the BS.

The BS may receive and measure the SRS transmitted by the UE towards the BS.

The BS may transmit the measurements to the SeMF and the SeMF may process the measurements to obtain information about the multiple target objects. The BS may periodically transmit the measurements to the SeMF and the SeMF may periodically process the measurements to obtain information about the multiple target objects. The information about the multiple target objects may comprise a shape, size, orientation, speed, location, distance or relative motion. The SeMF may maintain or update the multiple TPC parameter sets based on the information about the multiple target objects.

Additionally, the UE may receive third configuration information for configuring an SRS set for transmitting SRS signal towards the BS for communicating with the BS (i.e. direct beam).

The third configuration information may be received from the BS.

The third configuration information may indicate the SRS resource set.

The third configuration information may indicate SRS resources included in the SRS resource set.

The third configuration information may indicate a TPC parameter set.

The third configuration information may indicate a type of the SRS resources included in the SRS resource set. The type of the SRS resources may comprise periodic, aperiodic, persistent or semi-persistent.

The UE may configure the SRS resource set based on the third configuration information. The UE may determine a transmission power based on the TPC parameter set and the pathloss reference signal.

The UE may transmit, to the BS, the SRS on the SRS resource set based on the transmission power.

It will be understood, the UE may not necessarily receive separate second configuration information and/or third configuration information. To save SRS resources, the UE may receive one configuration information for configuring an SRS set for transmitting SRS signal towards the BS both for communicating with the BS and for sensing the multiple target objects.

The first implementation and the second implementation are advantageous in that they allow to use different transmission powers for different SRSs (e.g. SRS transmitted to a sensing area for sensing a target object, SRS transmitted to another sensing area for sensing another target object, SRS transmitted to the BS for sensing the target object or the other target object or SRS transmitted to the BS for communicating with the BS ) so that the target SINR may be reached at the BS for the different SRSs.

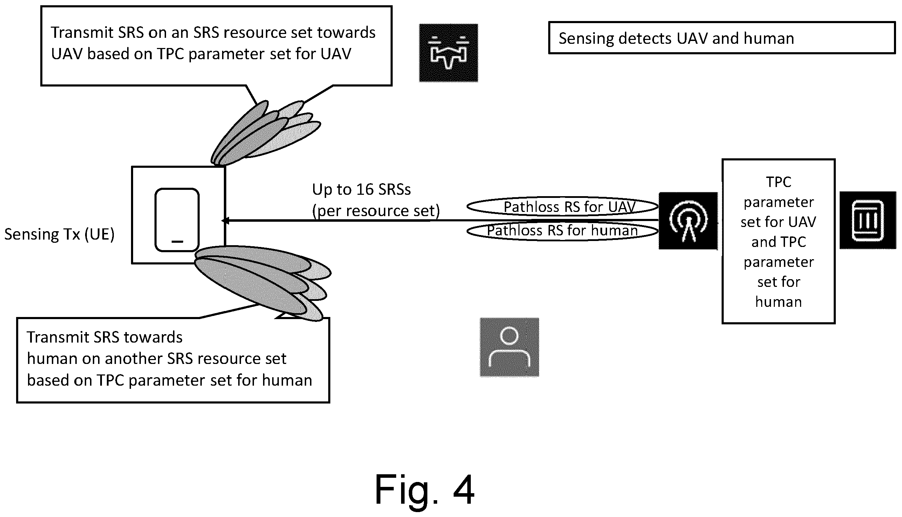

Fig. 4 shows a schematic representation of a scenario as per the second implementation where a UE configures an SRS resource set for transmitting an SRS towards a sensing area for sensing an unmanned aerial vehicle and another SRS resource set for transmitting another SRS towards another sensing area for sensing a human.

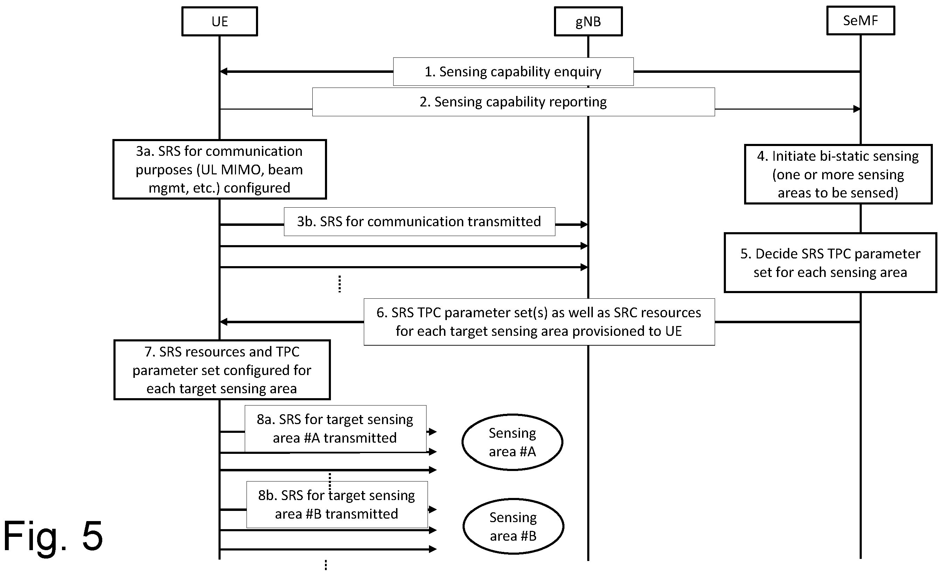

Fig. 5 shows a signaling diagram of a method for transmitting multiple SRSs towards multiple sensing areas for sensing multiple target objects in a 5GS.

At step 1, a SeMF may transmit a sensing capability enquiry to a UE. A SeMF may directly transmit the sensing capability enquiry to the UE. The SeMF may indirectly transmit the sensing capability enquiry to the UE via a gNB.

At step 2, the UE may transmit a sensing capability reporting to the SeMF. The UE may directly transmit the sensing capability reporting to the SeMF. The UE may indirectly transmit the sensing capability reporting to the SeMF.

The sensing capability reporting may indicate whether the UE is capable of being part of a bi-static sensing mechanism with the gNB.

The sensing capability reporting may indicate whether the UE is capable of operating as a sensing transmitter or a sensing receiver.

The sensing capability reporting may indicate parameters (e.g., supported bandwidth or antenna array capabilities) for operating as a sensing transmitter or a sensing receiver.

The sensing capability reporting may indicate a maximum number of SRS resource set.

The sensing capability reporting may indicate a maximum number of SRS resource set for transmitting at least one SRS towards at least one sensing area for sensing at least one object.

The sensing capability reporting may indicate a maximum number of SRS resources per SRS resource set for transmitting at least one SRS towards at least one sensing area for sensing at least one object.

The sensing capability reporting may indicate a maximum number of subgroups of SRS resources per SRS resource set for transmitting at least one SRS towards at least one sensing area for sensing at least one object.

The sensing capability reporting may indicate a maximum number of SRS resources per subgroup of SRS resources for transmitting at least one SRS towards at least one sensing area for sensing at least one object.

At step 3a, the UE may be in radio resource control connected mode. The UE may receive configuration information (i.e. "third configuration information") for configuring an SRS resource set for transmitting an SRS towards the gNB for communicating with the BS.

At step 3b, the UE may transmit an SRS on the SRS resource set.

At step 4, the SeMF may determine to initiate a bi-static sensing mechanism where the UE operates as a sensing transmitter and the gNB operates as a sensing receiver. The SeMF may determine that the UE should transmit an SRS towards a sensing area #A for sensing a target object. The SeMF may determine that the UE should transmit another SRS towards another sensing area #B for sensing another target object.

According to the first implementation, at step 5, the SeMF may determine configuration information (i.e. "first configuration information") for configuring a subgroup of SRS resources of an SRS resource set for transmitting an SRS towards the sensing area #A for sensing the target object.

The SeMF may determine other configuration information (i.e. "first configuration information") for configuring another subgroup of SRS resources of the SRS resource set for transmitting another SRS towards the sensing area #B for sensing the other target object.

At step 6, the UE may receive, from the SeMF, the configuration information for configuring the subgroup of SRS resources of the SRS resource set for transmitting the SRS towards the sensing area #A for sensing the target object.

The UE may receive, from the SeMF, the other configuration information for configuring the other subgroup of SRS resources of the SRS resource set for transmitting the other SRS towards the sensing area #B for sensing the other target object.

At step 7, the UE may configure the subgroup of SRS resources of the SRS resource set based on the configuration information. The UE may configure the other subgroup of SRS resources of the SRS resource set based on the other configuration information.

At step 8a, the UE may transmit the SRS towards the sensing area #A for sensing the target object on the subgroup of SRS resources of the SRS resource set.

At step 8b, the UE may transmit the other SRS towards the sensing area #B for sensing the other target object on the other subgroup of SRS resources of SRS resource set.

According to the second implementation, at step 5, the SeMF may determine configuration information (i.e. "first configuration information") for configuring an SRS resource set for transmitting an SRS towards the sensing area #A for sensing the target object.

The SeMF may determine other configuration information (i.e., "first configuration information") for configuring another SRS resource set for transmitting another SRS towards the sensing area #B for sensing the other target object.

At step 6, the UE may receive, from the SeMF, the configuration information for configuring the SRS resource set for transmitting the SRS towards the sensing area #A for sensing the target object.

The UE may receive, from the SeMF, the other configuration information for configuring the other SRS resource set for transmitting the other SRS towards the sensing area #B for sensing the other target object.

At step 7, the UE may configure the SRS resource set based on the configuration information. The UE may configure the other SRS resource set based on the other configuration information.

At step 8a, the UE may transmit the SRS towards the sensing area #A for sensing the target object on the SRS resource set.

At step 8b, the UE may transmit the other SRS towards the sensing area #B for sensing the other target object on the other SRS resource set.

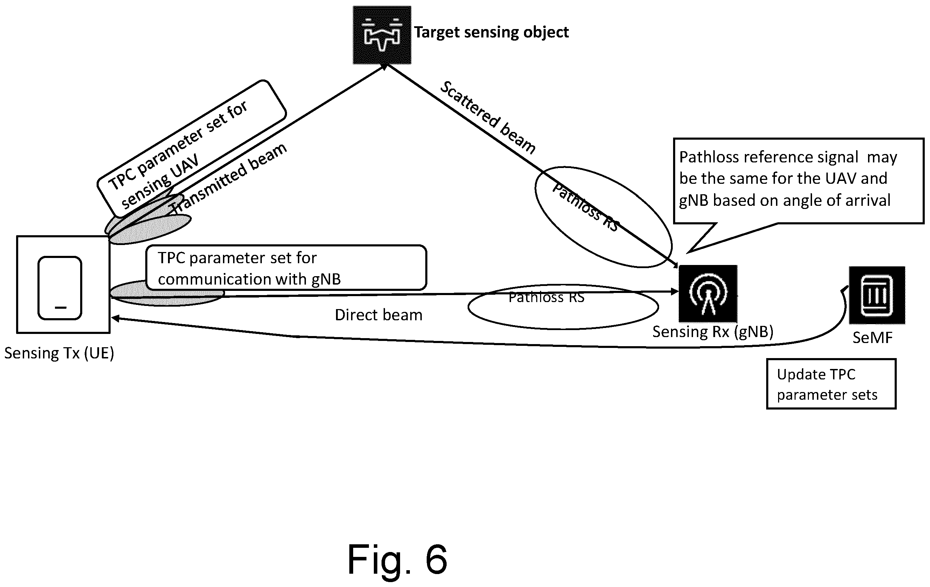

Fig. 6 shows a schematic representation of a scenario where a UE configures at least one SRS resource set for transmitting an SRS towards a sensing area for sensing an unmanned aerial vehicle and another SRS resource set for transmitting an SRS towards a gNB for sensing the unmanned aerial vehicle.

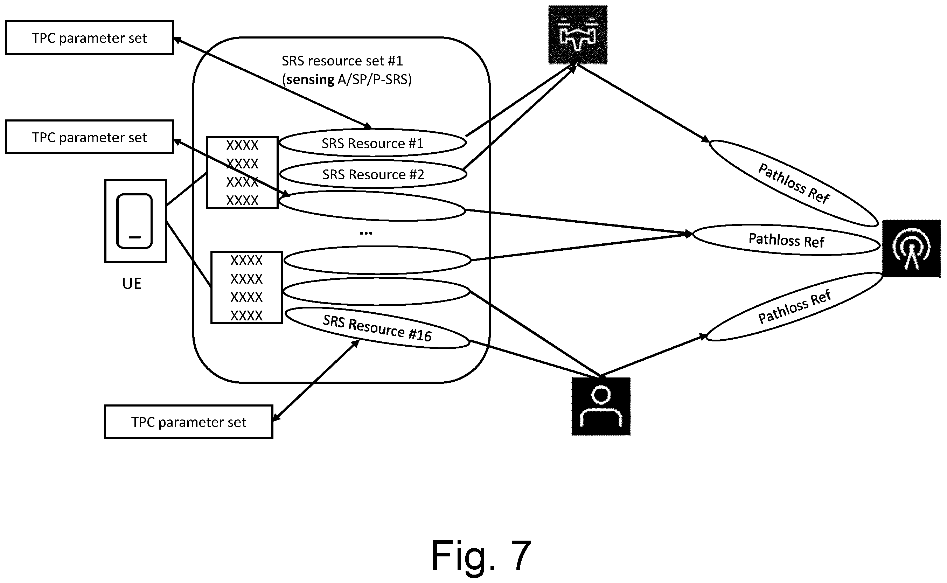

Fig. 7 shows a schematic representation of a scenario as per the first implementation where a user equipment configures a subgroup of SRS resources of an SRS resource set for transmitting an SRS towards a sensing area for sensing a target object, configures another subgroup of SRS resources of the SRS resource set for transmitting another SRS towards another sensing area for sensing another target object and configures another subgroup of SRS resources of the SRS resource set for transmitting another SRS towards a gNB for sensing the target object and the other target object;

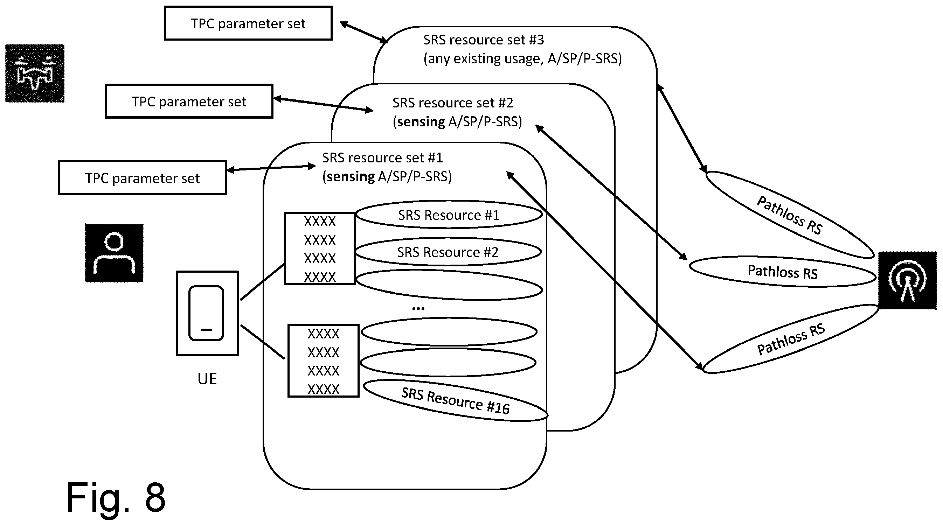

Fig. 8 shows a schematic representation of a scenario as per the second implementation where a UE configures an SRS resource set for transmitting an SRS towards a sensing area for sensing a target object, another SRS resource set for transmitting another SRS towards a gNB for sensing the target object and another SRS set for transmitting another SRS towards the gNB for communicating with the gNB.

In the first implementation and the second implementation, the UE may determine multiple transmission powers for transmitting multiple SRSs on multiple subgroups of SRS resources of an SRS resource set or on multiple SRS resource sets. Each transmission power may be determined or adjusted by the UE based on a transmission power offset. The transmission power offset may be received by the UE from a BS in a TPC command.

ATPC command may indicate a transmission power offset associated with a subgroup of SRS resources of an SRS resource set or an SRS resource set. Alternatively, each TPC command may indicate multiple transmission power offsets associated with multiple subgroups of SRS resources of an SRS resource set or multiple SRS resource sets.

In this way, the transmission power of an SRS transmitted on a subgroup of SRS resources of an SRS resource set or an SRS resource set may be adjusted independently from the transmission power of another SRS transmitted on another subgroup of SRS resources of the SRS resource set or another SRS resource set.

For example, the transmission power of an SRS transmitted on a subgroup of SRS resources of an SRS resource set towards a sensing area for sensing a target object may be adjusted independently from the transmission power of another SRS transmitted on another subgroup of SRS resources of the SRS resource set towards a gNB for sensing the target object or from the transmission power of another SRS transmitted on another subgroup of SRS resources of the SRS resource set towards a gNB for communicating with the gNB.

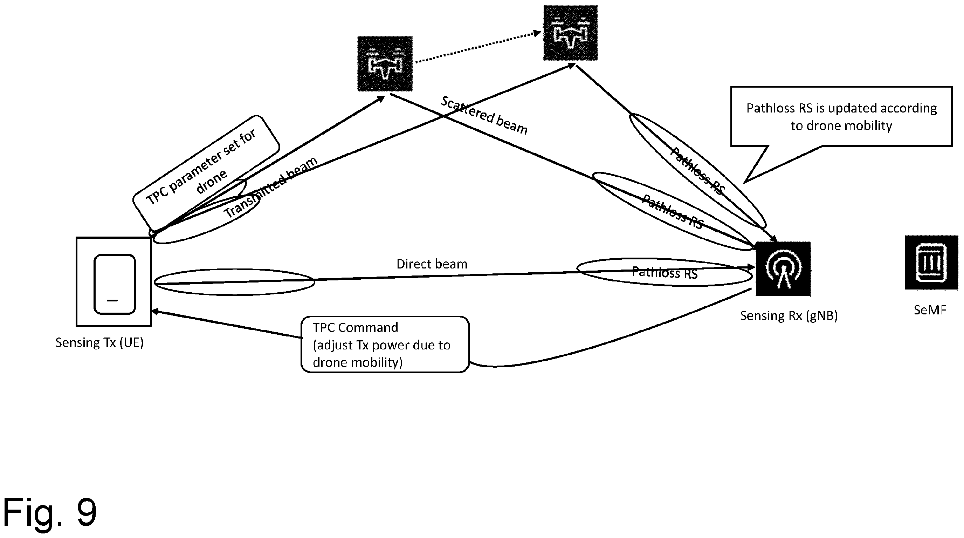

Fig. 9 shows a schematic representation of a scenario where a UE receives a TPC command comprising a transmission power offset, adjust the transmission power of an SRS transmitted towards a sensing area for sensing a target object based on the transmission power offset. The UE does not adjust the transmission power of another SRS transmitted towards a gNB for sensing the target object or for communicating with the BS based on the transmission power offset.

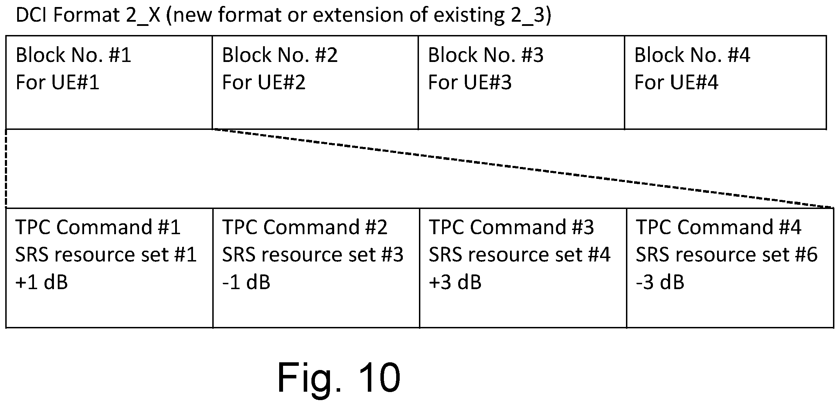

Fig. 10 shows a schematic representation of a downlink control information (DCI) format 2_X (new format or extension of format 2_3). The DCI format 2_X comprises multiple blocks. Each block is associated with (i.e. specific to) a UE. Each block comprises multiple TPC commands. Each TPC command is associated with (i.e. specific to) an SRS resource set and a transmission power offset. Here, each TPC command may not indicate an SRS resource set and may indicate a transmission power offset. That is, the association between each TPC command and an SRS resource set may not be defined by the TPC command. The association between each TPC command and an SRS resource set may be pre-defined by higher layer (e.g. by radio resource control signalling).

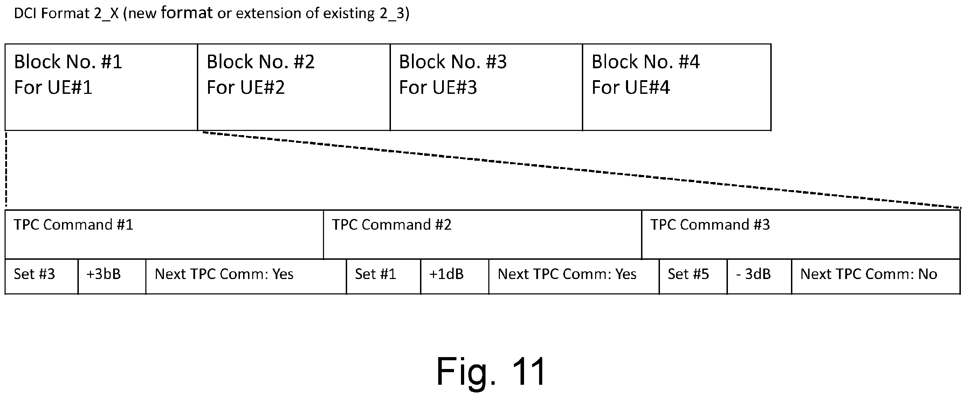

Fig. 11 shows a schematic representation of another DCI format 2_X (new format or extension of format 2_3). The DCI format 2_X comprises multiple blocks. Each block is associated with (i.e. specific to) a UE. Each block comprises multiple TPC commands. Each TPC command is associated with (i.e. specific to) an SRS resource set and a transmission power offset. Each TPC command indicates an SRS resource set and a transmission power offset. That is, the association between each TPC command and an SRS resource may be defined by the TPC command. Each TPC command may also indicate whether a subsequent TPC command is present (e.g. yes or no).

Alternatively, each TPC command does not indicate an SRS resource set and indicates a transmission power offset. That is, the association between each TPC command and an SRS resource may be not be defined by the TPC command. The association between each TPC command and an SRS resource may be defined by padding bits at the end of DCI format 2_X.

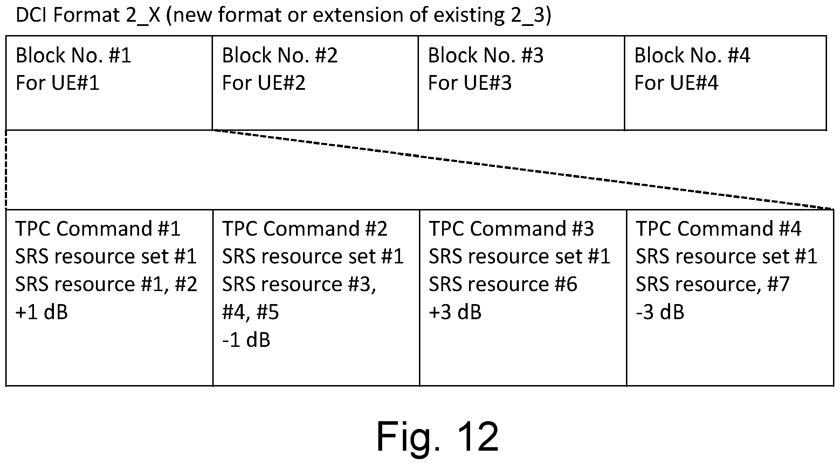

Fig. 12 shows a schematic representation of another DCI format 2_X (new format or extension of format 2_3). The DCI format 2_X comprises multiple blocks. Each block is associated with (i.e. specific to) a UE. Each block comprises multiple TPC commands. Each TPC command is associated with (i.e. specific to) an SRS resource set, a subgroup of SRS resources and a transmission power offset. Each TPC command may not indicate an SRS resource set and a subgroup of SRS resources and may indicate a transmission power offset. That is, the association between each TPC command and an SRS resource set and a subgroup of SRS resources may not be defined by the TPC command. The association between each TPC command and an SRS resource set and a subgroup of SRS resources may be defined by higher layer (e.g. by radio resource control signalling).

Alternatively, the DCI format 2_X comprises multiple blocks. Each block is associated with (i.e. specific to) a UE. Each block comprises multiple TPC commands. Each TPC command is associated with (i.e. specific to) an SRS resource set, a subgroup of SRS resources and a transmission power offset. Each TPC command may indicate an SRS resource set and a subgroup of SRS resources and may indicate a transmission power offset. That is, the association between each TPC command and an SRS resource set and a subgroup of SRS resources may be defined by the TPC command.

In this way, the transmission power of an SRS transmitted on a subgroup of SRS resources of an SRS resource set or an SRS resource set may be adjusted independently from the transmission power of another SRS transmitted on another subgroup of SRS resources of the SRS resource set or another SRS resource set.

In the first implementation and the second implementation, the UE may determine multiple transmission powers for transmitting multiple SRSs on multiple subgroups of SRS resources of an SRS resource set or on multiple SRS resource sets. Each transmission power may be determined or adjusted by the UE based on a pathloss. The pathloss may be estimated by the UE based on a pathloss reference signal. An indication of the pathloss reference signal may be received by the UE in a medium access control (MAC) control element (CE).

A MAC CE may indicate a pathloss reference signal associated with (i.e. specific to) a subgroup of SRS resources of an SRS resource set.

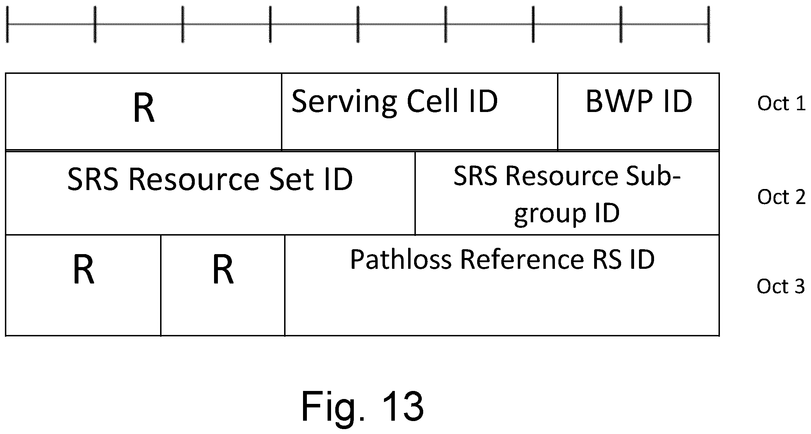

Fig. 13 shows a schematic representation of a MAC CE indicating an updated pathloss reference signal associated with a subgroup of SRS reference resources of an SRS reference resource set. The MAC CE may indicate at least one of a serving cell, a bandwidth part, a subgroup of SRS reference resources, an SRS reference resource set and a pathloss reference signal.

In this way, the transmission power of an SRS transmitted on a subgroup of SRS resources of an SRS resource set or an SRS resource set may be adjusted independently from the transmission power of another SRS transmitted on another subgroup of SRS resources of the SRS resource set or another SRS resource set.

Alternatively, a MAC CE may indicate a pathloss reference signal associated with (i.e. specific to) an SRS resource set. The MAC CE may indicate at least one of a serving cell, a bandwidth part, an SRS reference resource set and a pathloss reference signal.

In this way, the transmission power of an SRS transmitted on an SRS resource set may be adjusted independently from the transmission power of another SRS transmitted on another SRS resource set.

Fig. 14 shows a schematic representation of a scenario as per the first implementation where a UE may configure an SRS resource set for transmitting an SRS towards a sensing area for sensing a target object on a subgroup of SRS resources of the SRS resource set based on a pathloss reference signal (i.e the UE may determine a transmission power of the SRS transmitted on the sub-group of SRS resources based on the pathloss reference signal). The UE may receive a MAC CE indicating an updated pathloss reference signal for the sub-group of SRS resources. The UE may reconfigure the SRS set for transmitting the SRS towards the sensing area for sensing the target object on the sub-group of SRS resources based on the updated pathloss reference signal (i.e. the UE may adjust the transmission power of the SRS transmitted on the sub-group of SRS resources based on the updated pathloss reference signal).

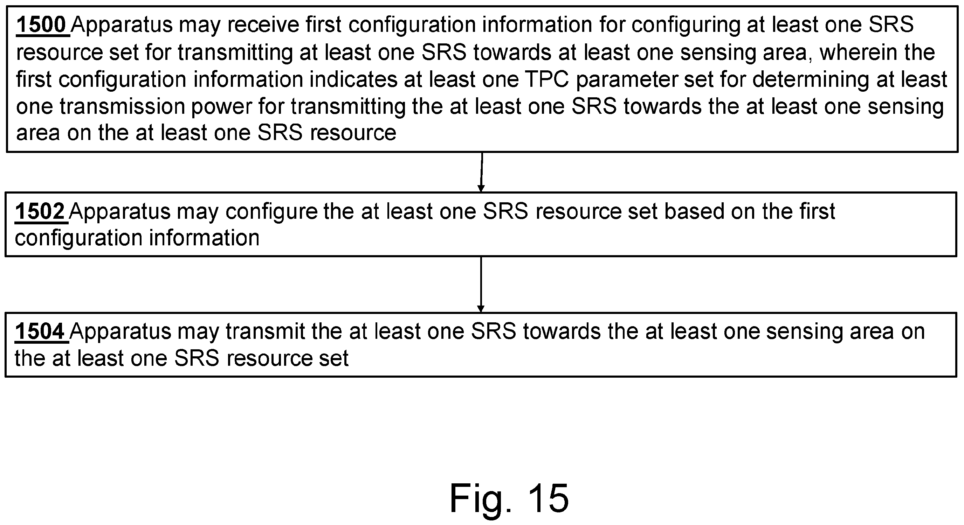

Fig. 15 shows a block diagram of a method for transmitting at least one SRS towards at least one sensing area for sensing at least one target object in a communication system.

At step 1500, an apparatus may receive first configuration information for configuring at least one SRS resource set for transmitting at least one SRS towards at least one sensing area, wherein the first configuration information indicates at least one TPC parameter set for determining at least one transmission power for transmitting the at least one SRS towards the at least one sensing area on the at least one SRS resource.

At step 1502, the apparatus may configure the at least one SRS resource set based on the first configuration information.

At step 1504, the apparatus may transmit the at least one SRS towards the at least one sensing area on the at least one SRS resource set.

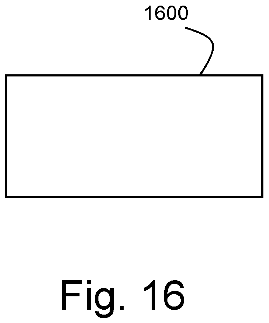

Fig. 16 shows a schematic representation of non-volatile memory media 1600 storing instructions which when executed by a processor allow the processor to perform one or more of the steps of the method of Fig. 15.

It is noted that while the above describes example embodiments, there are several variations and modifications which may be made to the disclosed solution without departing from the scope of the present invention.

It will be understood that although the above concepts have been discussed in the context of a 5GS, one or more of these concepts may be applied to other cellular systems.

The embodiments may thus vary within the scope of the attached claims. In general, some embodiments may be implemented in hardware or special purpose circuits, software, logic or any combination thereof. For example, some aspects may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by computer software stored in a memory and executable by at least one data processor of the involved entities or by hardware, or by a combination of software and hardware. Further in this regard it should be noted that any procedures, e.g., as in Fig. 15, may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Alternatively or additionally some embodiments may be implemented using circuitry. The circuitry may be configured to perform one or more of the functions and/or method steps previously described. That circuitry may be provided in the base station and/or in the communications device.

As used in this application, the term "circuitry" may refer to one or more or all of the following:

(a) hardware-only circuit implementations (such as implementations in only analogue and/or digital circuitry);
(b) combinations of hardware circuits and software, such as:

(i) a combination of analogue and/or digital hardware circuit(s) with software/firmware and
(ii) any portions of hardware processor(s) with software (including digital signal processor(s)), software, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example integrated device.

The foregoing description has provided by way of exemplary and non-limiting examples a full and informative description of some embodiments However, various modifications and adaptations may become apparent to those skilled in the relevant arts in view of the foregoing description, when read in conjunction with the accompanying drawings and the appended claims. However, all such and similar modifications of the teachings will still fall within the scope as defined in the appended claims.

**Claims**

**1.** An apparatus comprising:

means for receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set;
means for configuring the at least one sounding reference signal resource set based on the first configuration information; and
means for transmitting the at least one sounding reference signal towards the at least one sensing area on the at least one sounding reference signal resource set.

**2.** The apparatus of claim 1,

wherein the means for receiving first configuration information for configuring at least one sounding reference signal resource set for transmitting at least one sounding reference signal towards at least one sensing area comprise:

means for receiving first configuration information for configuring multiple subgroups of sounding reference signal resources of a single sounding reference signal resource set for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple subgroups of sounding reference signal resources;

wherein the means for configuring the at least one sounding reference signal resource set based on the first configuration information comprise:

means for configuring the single sounding reference signal resource set based on the first configuration information; and

wherein the means for transmitting the at least one sounding reference signal towards the at least one sensing area on the at least one sounding reference signal resource set comprise:

means for transmitting multiple sounding reference signals towards the multiple sensing areas on the multiple subgroups of sounding reference signal resources .

3. The apparatus of claim 1,

wherein the means for receiving first configuration information for configuring at least one sounding reference signal resource set for transmitting at least one sounding reference signal towards at least one sensing area comprise:

means for receiving first configuration information for configuring multiple sounding reference signal resource sets for transmitting multiple sounding reference signals towards multiple sensing areas, wherein the first configuration information indicates multiple transmission power control parameter sets for determining multiple transmission powers for transmitting the multiple sounding reference signals towards the multiple sensing areas on the multiple sounding reference signal resource sets;

wherein the means for configuring the at least one sounding reference signal resource set based on the first configuration information comprise:

means for configuring the multiple sounding reference signal resource sets based on the first configuration information; and

wherein the means for transmitting the at least one sounding reference signal towards the at least one sensing area on the at least one sounding reference signal resource set comprise:

means for transmitting the multiple sounding reference signals towards the multiple sensing areas on the multiple sounding reference signal resource sets.

4. The apparatus of any of claims 1 to 3, wherein the at least one transmission power control parameter set comprises at least one of the following:

a target signal to interference plus noise ratio P0;
a pathloss compensation coefficient $\alpha$;
at least one pathloss reference signal associated with the at least one sounding reference signal resource set; or
an association between a transmission power control command and a sounding reference signal resource set or a subgroup of sounding reference signal resources included in a sounding reference signal resource set.

5. The apparatus of any of claims 1 to 4, wherein the at least one transmission power control parameter set is received from a sensing management function.

6. The apparatus of claim 5, wherein the first configuration information comprising the at least one transmission power control parameter set is received directly from a sensing management function; or
wherein the first configuration information comprising the at least one transmission power control parameter set is received indirectly from a sensing management function via a base station.

7. The apparatus of any of claims 1 to 6, comprising:
means for receiving updated first configuration information indicating at least one updated transmission power control parameter set for determining at least one updated transmission power for transmitting the at least one sounding reference signal towards the at least one sensing area on the at least one sounding reference signal resource set.

8. The apparatus of any of claims 1 to 7, wherein the at least one transmission power control parameter set is based on at least one of:

    characteristics of the at least one sensing area;
    characteristics of at least one target object; or
    interference caused by the apparatus to a neighbour base station.

9. The apparatus of claim 8, wherein the characteristics of at least one target object comprise at least one of:

    a radar cross section of the at least one target object; or
    a type of the at least one target object.

10. The apparatus of any of claims 1 to 9, wherein the first configuration information indicates at least one of:

    at least one sounding reference signal resource set;
    at least one sounding reference signal resource included in the at least one sounding reference signal resource set; or
    a type of the at least one sounding reference signal resource included in the at least one sounding reference signal resource set.

11. The apparatus of any of claims 1 to 10, wherein configuring the least one sounding reference signal resource set for transmitting the at least one sounding reference signal based on the first configuration information comprises determining at least one transmission power for transmitting the at least one sounding reference signal based on the at least one transmission power control parameter set.

12. The apparatus of any of claims 1 to 11, comprising:

    means for receiving second configuration information for configuring at least one sounding reference signal resource set for transmitting at least one sounding reference signal towards a base station, wherein the second configuration information comprises at least one transmission power control parameter set for determining at least one transmission power for transmitting the at least one sounding reference signal towards the base station on the at least one sounding reference signal resource set;
    means for configuring the at least one sounding reference signal resource set based on the second configuration information; and
    means for transmitting the at least one sounding reference signal toward the base station on the at least one sounding reference signal resource set.

13. The apparatus of any of claims 1 to 12 comprising:

    means for receiving third configuration information for configuring at least one sounding reference signal resource set for transmitting at least one sounding reference signal towards a base station for communicating with the base station, wherein the third configuration information comprises at least one transmission power control parameter set for determining at least one transmission power for transmitting the at least one sounding reference signal towards the base station on the at least one sounding reference signal resource set;
    means for configuring the at least one sounding reference signal resource set based on the third configuration information; and
    means for transmitting the at least one sounding reference signal toward the base station on the at least one sounding reference signal resource set.

14. The apparatus of claim 12 and claim 13, wherein the second configuration information and the third configuration information comprise same configuration information.

15. The apparatus of any of claims 1 to 14, comprising:

    means for receiving at least one transmission power control command indicating at least one transmission power offset associated with at least one sounding reference signal resource set; and
means for adjusting at least one transmission power of at least one sounding reference signal transmitted on the at least one sounding reference signal resource set based on the at least one transmission power offset.

16. The apparatus of any of claims 1 to 15, comprising:

means for receiving at least one transmission power control command indicating at least one sounding reference signal resource set and at least one transmission power offset associated with at least one sounding reference signal resource set; and
means for adjusting at least one transmission power of at least one sounding reference signal transmitted on the at least one sounding reference signal resource set based on the at least one transmission power offset.

17. The apparatus of any of claims 1 to 14, comprising:

means for receiving at least one transmission power control command indicating at least one transmission power offset associated with at least one sounding reference signal resource included in at least one sounding reference signal resource set; and
means for adjusting at least one transmission power of at least one sounding reference signal transmitted on the at least one sounding reference signal resource included in the at least one sounding reference signal resource set based on the at least one transmission power offset.

18. The apparatus of any of claims 1 to 14, comprising:

means for receiving at least one transmission power control command indicating at least one sounding reference signal resource included in at least one sounding reference signal resource set and at least one transmission power offset associated with the at least one sounding reference signal resource included in at least one sounding reference signal resource set; and
means for adjusting at least one transmission power of at least one sounding reference signal transmitted on the at least one sounding reference signal resource included in the at least one sounding reference signal resource set based on the at least one transmission power offset.

19. The apparatus of any of claims 1 to 18, comprising:

means for receiving a medium access control control element indicating an updated pathloss reference signal associated with at least one sounding reference signal resource set; and
means for reconfiguring the at least one sounding reference signal resource set based on the updated pathloss reference signal.

20. The apparatus of any of claims 1 to 19, comprising:

means for receiving a medium access control control element indicating an updated pathloss reference signal associated with at least one sounding reference signal resource included in at least one sounding reference signal resource set; and
means for reconfiguring the at least one sounding reference signal resource set based on the updated pathloss reference signal.

21. The apparatus of any of claims 1 to 20, wherein the apparatus is a user equipment.

22. A method comprising:

receiving first configuration information for configuring at least one sounding reference signal resource set for transmitting at least one sounding reference signal towards at least one sensing area, wherein the first configuration information indicates at least one transmission power control parameter set for determining at least one transmission power for transmitting the at least one sounding reference signal towards the at least one sensing area on the at least one sounding reference signal resource set;
configuring the at least one sounding reference signal resource set based on the first configuration information; and
transmitting the at least one sounding reference signal towards the at least one sensing area on the at least one sounding reference signal resource set.

23. A computer program comprising computer executable instructions which when run on one or more processors perform the steps of the method of claim 22.

5GC

| NEF | | NRF | | UDM | | SeMF | | AF |

| AUSF | | AMF | | SMF | | LMF |

| UE | | (R)AN | | UPF | DN

# Fig. 1

200

214

213

212

211a

215

211b

Fig. 2

Fig. 3

Transmit SRS on an SRS resource set towards UAV based on TPC parameter set for UAV

Sensing detects UAV and human

Sensing Tx (UE)

Up to 16 SRSs (per resource set)

Pathloss RS for UAV

Pathloss RS for human

TPC parameter set for UAV and TPC parameter set for human

Transmit SRS towards human on another SRS resource set based on TPC parameter set for human

Fig. 4

Fig. 5

Target sensing object

TPC parameter set for sensing UAV

Transmitted beam

Scattered beam

Pathloss RS

Pathloss reference signal may be the same for the UAV and gNB based on angle of arrival

TPC parameter set for communication with gNB

Direct beam

Pathloss RS

Sensing Rx (gNB)

SeMF

Sensing Tx (UE)

Update TPC parameter sets

# Fig. 6

Fig. 7

Pathloss RS

Pathloss RS

Pathloss RS

SRS resource set #3
(any existing usage, A/SP/P-SRS)

SRS resource set #2
(**sensing** A/SP/P-SRS)

SRS resource set #1
(**sensing** A/SP/P-SRS)

SRS Resource #1

SRS Resource #2

...

SRS Resource #16

XXXX
XXXX
XXXX
XXXX

XXXX
XXXX
XXXX
XXXX

TPC parameter set

TPC parameter set

TPC parameter set

UE

Fig. 8

Fig. 9

Pathloss RS is updated according to drone mobility

TPC parameter set for drone

Scattered beam

Transmitted beam

Pathloss RS

Pathloss RS

Direct beam

Pathloss RS

TPC Command (adjust Tx power due to drone mobility)

Sensing Tx (UE)

Sensing Rx (gNB)

SeMF

DCI Format 2_X (new format or extension of existing 2_3)

| Block No. #1<br>For UE#1 | Block No. #2<br>For UE#2 | Block No. #3<br>For UE#3 | Block No. #4<br>For UE#4 |
|---|---|---|---|
| TPC Command #1<br>SRS resource set #1<br>+1 dB | TPC Command #2<br>SRS resource set #3<br>-1 dB | TPC Command #3<br>SRS resource set #4<br>+3 dB | TPC Command #4<br>SRS resource set #6<br>-3 dB |

# Fig. 10

EP 4 593 474 A1

DCI Format 2_X (new format or extension of existing 2_3)

| Block No. #1<br>For UE#1 | Block No. #2<br>For UE#2 | Block No. #3<br>For UE#3 | Block No. #4<br>For UE#4 |
|---|---|---|---|

| TPC Command #1 | | | TPC Command #2 | | | TPC Command #3 | | |
|---|---|---|---|---|---|---|---|---|
| Set #3 | +3bB | Next TPC Comm: Yes | Set #1 | +1dB | Next TPC Comm: Yes | Set #5 | - 3dB | Next TPC Comm: No |

## Fig. 11

EP 4 593 474 A1

DCI Format 2_X (new format or extension of existing 2_3)

| Block No. #1<br>For UE#1 | Block No. #2<br>For UE#2 | Block No. #3<br>For UE#3 | Block No. #4<br>For UE#4 |
|---|---|---|---|
| TPC Command #1<br>SRS resource set #1<br>SRS resource #1, #2<br>+1 dB | TPC Command #2<br>SRS resource set #1<br>SRS resource #3,<br>#4, #5<br>-1 dB | TPC Command #3<br>SRS resource set #1<br>SRS resource #6<br>+3 dB | TPC Command #4<br>SRS resource set #1<br>SRS resource, #7<br>-3 dB |

## Fig. 12

EP 4 593 474 A1

| R | Serving Cell ID | | BWP ID | Oct 1 |
|---|---|---|---|---|
| SRS Resource Set ID | | SRS Resource Sub-group ID | | Oct 2 |
| R | R | Pathloss Reference RS ID | | Oct 3 |

Fig. 13

Fig. 14

**1500** Apparatus may receive first configuration information for configuring at least one SRS resource set for transmitting at least one SRS towards at least one sensing area, wherein the first configuration information indicates at least one TPC parameter set for determining at least one transmission power for transmitting the at least one SRS towards the at least one sensing area on the at least one SRS resource

**1502** Apparatus may configure the at least one SRS resource set based on the first configuration information

**1504** Apparatus may transmit the at least one SRS towards the at least one sensing area on the at least one SRS resource set

Fig. 15

1600

Fig. 16

**EUROPEAN SEARCH REPORT**

Application Number

EP 24 15 4390

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/169266 A1 (SAMSUNG ELECTRONICS CO LTD [KR]) 11 August 2022 (2022-08-11) <br> * paragraphs [0296] - [0322], [0360] - [0383], [0481] - [0483] * <br> * table 1 * <br> - - - - - | 1-23 | INV. <br> H04W52/32 |

| TECHNICAL FIELDS SEARCHED (IPC) |
|---|
| H04W |

The present search report has been drawn up for all claims

| Place of search | Date of completion of the search | Examiner |
|---|---|---|
| The Hague | 26 June 2024 | Lustrini, Donato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 4390

This annex lists the patent family members relating to the patent documents cited in the above-mentioned European search report.
The members are as contained in the European Patent Office EDP file on
The European Patent Office is in no way liable for these particulars which are merely given for the purpose of information.

26-06-2024

| Patent document cited in search report | Publication date | Patent family member(s) | | Publication date |
|---|---|---|---|---|
| WO 2022169266 A1 | 11-08-2022 | CN | 116806441 A | 26-09-2023 |
| | | EP | 4260635 A1 | 18-10-2023 |
| | | KR | 20220112704 A | 11-08-2022 |
| | | US | 2022256519 A1 | 11-08-2022 |
| | | WO | 2022169266 A1 | 11-08-2022 |

EPO FORM P0459

For more details about this annex : see Official Journal of the European Patent Office, No. 12/82